# EUROPEAN PATENT APPLICATION

(11) **EP 4 825 589 A1**
(43) Date of publication of application: **21.10.2026**
(21) Application number: 26171499.2
(22) Date of filing: 09.04.2026
(51) Int. Cl.: B41J 2/175

(54) **PRESSURE REGULATING VALVE APPARATUS, LIQUID DISPENSING APPARATUS, AND INKJET RECORDING APPARATUS**

(30) Priority: 17.04.2025 JP 2025067926
(71) Applicant: KYOCERA Document Solutions Inc., Osaka-shi, Osaka 540-8585 (JP)
(72) Inventor: Tsuboi, Shun, Osaka-shi, 540-8585 (JP); Satake, Kenichi, Osaka-shi, 540-8585 (JP); Yoneda, Shogo, Osaka-shi, 540-8585 (JP); Ishida, Hideki, Osaka-shi, 540-8585 (JP); Imanaka, Koichi, Osaka-shi, 540-8585 (JP); Nishida, Nanako, Osaka-shi, 540-8585 (JP)
(74) Representative: Plougmann Vingtoft a/s

(57) **Abstract**

A primary chamber is connected to an inflow path. A secondary chamber is connected to an outflow path and has an opening formed therein. A cover member closes the opening and includes a diaphragm. An outflow path inlet is connected to a first end portion of the secondary chamber and the connecting hole is connected to a portion closer to a second end portion than the first end portion of the secondary chamber.

## Description

### Background

The present disclosure relates to a pressure regulating valve apparatus, a liquid dispensing apparatus, and an inkjet recording apparatus.

The pressure regulating valve apparatus is disposed in a supply path for liquid to a liquid dispensing head. Each of the liquid dispensing apparatus and the inkjet recording apparatus includes the pressure regulating valve apparatus.

The inkjet recording apparatus includes an ink dispensing device that dispenses ink droplets to a sheet from an inkjet head so as to form an image on the sheet. The ink dispensing device is an example of the liquid dispensing apparatus that dispenses droplets. The inkjet head is an example of the liquid dispensing head.

In such a liquid dispensing apparatus, the pressure regulating valve apparatus may be disposed in a supply path connecting a liquid storage part to the liquid dispensing head.

The pressure regulating valve apparatus includes a primary chamber in which the liquid flows, a secondary chamber that is connected to the primary chamber through a connecting hole, a valve that opens and closes the connecting hole, and a cover part that closes an opening formed in the secondary chamber.

In addition, the pressure regulating valve apparatus includes an inflow path that is connected to the supply path and the primary chamber and an outflow path that is connected to the secondary chamber and the supply path.

The cover part includes a diaphragm. The diaphragm expands and contracts in response to pressure changes in the secondary chamber. The valve opens and closes the connecting hole in response to the expansion and contraction of the diaphragm. The valve opens the connecting hole, such that the liquid flows into the liquid dispensing head from the liquid storage part via the inflow path, the primary chamber, the secondary chamber, and the outflow path.

For example, it is known that an opening of the outflow path on the side of the secondary chamber is formed in a lower end portion of the secondary chamber.

### Summary

A pressure regulating valve apparatus according to an aspect of the present disclosure is disposed in a supply path, which is connected to a liquid storage part for storing liquid and to a liquid dispensing head for dispensing droplets. The pressure regulating valve apparatus switches from a state to block the supply path to a state to unblock the supply path in response to pressure changes caused in the supply path due to dispensing of the droplets by the liquid dispensing head. The pressure regulating valve apparatus includes an inflow path, a primary chamber, an outflow path, a secondary chamber, a partition wall, a cover member, and a valve. The inflow path is a flow channel for the liquid that flows therein from an upstream side of the supply path. The primary chamber is connected to the inflow path. The outflow path is a flow channel for the liquid that flows out therefrom to a downstream side of the supply path. The secondary chamber is connected to the outflow path and has an opening formed therein. The partition wall separates the primary chamber and the secondary chamber and has a connecting hole formed therein to be connected to the primary chamber and the secondary chamber. The cover member closes the opening and includes a diaphragm that expands and contracts in response to pressure changes in the secondary chamber. The valve opens and closes the connecting hole in response to the expansion and contraction of the diaphragm. An outflow path inlet is one end of the outflow path is connected to a first end portion of the secondary chamber in a second direction intersecting a first direction that is a direction in which the primary chamber and the secondary chamber are arranged. The connecting hole is connected to a portion closer to a second end portion of the secondary chamber in the second direction than the first end portion of the secondary chamber in the second direction.

A liquid dispensing apparatus according to another aspect of the present disclosure includes a supply path, a liquid dispensing head, and the above-mentioned pressure regulating valve apparatus. The supply path is connected to a liquid storage part for storing liquid. The liquid dispensing head is connected to the supply path, includes a plurality of nozzles, is supplied with the liquid from the liquid storage part through the supply path, and dispenses droplets from each of the plurality of nozzles. The pressure regulating valve apparatus is disposed in the supply path.

An inkjet recording apparatus according to another aspect of the present disclosure includes: a sheet conveying device that conveys a sheet; and the above-mentioned liquid dispensing apparatus that forms an image on the sheet by dispensing ink droplets to the conveyed sheet.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

These and other objects, features and advantages of the present disclosure will become more apparent in light of the following detailed description of best mode embodiments thereof, as illustrated in the accompanying drawings.

### Brief Description of Figures

Fig. 1 is a configuration diagram of an inkjet recording apparatus according to an embodiment.
Fig. 2 is a configuration diagram of an ink supplying device and an inkjet head in the inkjet recording apparatus according to the embodiment.
Fig. 3 is a cross-sectional view of a pressure regulating valve apparatus in a closed state in the inkjet recording apparatus according to the embodiment.
Fig. 4 is a cross-sectional view of the pressure regulating valve apparatus in an open state in the inkjet recording apparatus according to the embodiment.
Fig. 5 is a front view of a main body of the pressure regulating valve apparatus in the inkjet recording apparatus according to the embodiment.
Fig. 6 is a perspective view of the main body of the pressure regulating valve apparatus in the inkjet recording apparatus according to the embodiment.
Fig. 7 is a cross-sectional view of a pressure regulating valve apparatus according to a first modified example.
Fig. 8 is a front view of a main body of the pressure regulating valve apparatus according to the first modified example.
Fig. 9 is a cross-sectional view of a pressure regulating valve apparatus according to a second modified example.
Fig. 10 is a front view of a main body of the pressure regulating valve apparatus according to the second modified example.
Fig. 11 is a cross-sectional view of a pressure regulating valve apparatus according to a third modified example.

### Detailed Description

Hereinafter, an embodiment of the present disclosure will be described with reference to the drawings. Note that the following embodiment is an example embodying the present disclosure, not limiting the technical range of the present disclosure.

### [Configuration of inkjet recording apparatus 10]

An inkjet recording apparatus 10 according to the embodiment is an image forming apparatus capable of executing print processing by an inkjet method. The print processing is processing of forming an image on a sheet 9. The sheet 9 is a sheet-like image forming medium, such as paper or a resin film.

Note that the inkjet recording apparatus 10 may be for example a facsimile apparatus, a copying machine, or a multifunction peripheral capable of executing the print processing by the inkjet method.

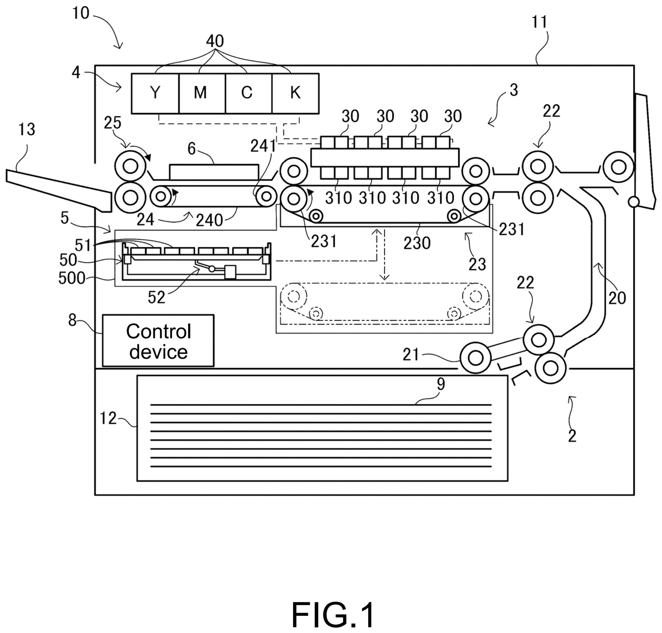

As shown in Fig. 1, the inkjet recording apparatus 10 includes for example a sheet storage part 12, a sheet conveying device 2, an ink dispensing device 3, a drying device 6, and a control device 8. The sheet conveying device 2, the ink dispensing device 3, the drying device 6, and the control device 8 are housed in a casing 11 that constitutes the main body.

The ink dispensing device 3 includes an ink supplying device 4, a plurality of inkjet heads 30, and an ink discharging device 5. The ink supplying device 4 supplies ink to the plurality of inkjet heads 30.

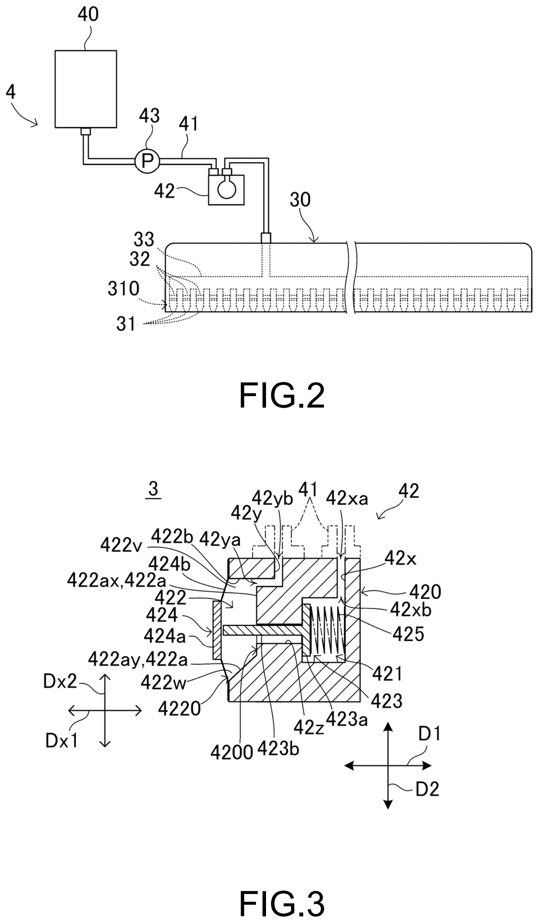

The inkjet heads 30 respectively have nozzle groups 310 each constituted by a plurality of nozzles 31 (see Fig. 1 and 3). The plurality of nozzles 31 each dispenses ink droplets. The ink discharging device 5 executes ink discharging processing of discharging the ink from the plurality of inkjet heads 30.

The sheet storage part 12 is capable of storing a plurality of sheets 9. The sheet conveying device 2 conveys each of sheets 9 stored in the sheet storage part 12 along a sheet conveying path 20 and further outputs the conveyed sheet 9 to an output tray 13 from the sheet conveying path 20.

For example, the sheet conveying device 2 includes a sheet feeding mechanism 21, a plurality of conveying roller pairs 22, a main conveyance unit 23, a post-stage conveying unit 24, and a output roller pair 25. The sheet feeding mechanism 21 feeds each sheet 9 from the sheet storage part 12 to the sheet conveying path 20.

The plurality of conveying roller pairs 22 takes over the conveyance of the sheet 9 from the sheet feeding mechanism 21 and conveys the sheet 9 toward the main conveyance unit 23.

The main conveyance unit 23 is disposed below the plurality of inkjet heads 30. The main conveyance unit 23 conveys each sheet 9 along the nozzle groups 310 constituted by the plurality of inkjet heads 30.

In the main conveyance unit 23, a plurality of stretching rollers 231 rotates an endless main conveyance belt 230 while supporting the endless main conveyance belt 230. Accordingly, the main conveyance unit 23 conveys each sheet 9 on an upper surface of a main conveyance belt 230 and feeds each sheet 9 to the post-stage conveying unit 24. The portion between the upper surface of the main conveyance belt 230 and the plurality of inkjet heads 30 forms a part of the sheet conveying path 20.

The post-stage conveying unit 24 is disposed on a downstream side in the sheet conveying direction with respect to the main conveyance unit 23 located in a reference position.

In the post-stage conveying unit 24, the plurality of stretching rollers 241 rotates an endless post-stage conveying belt 240 while supporting the endless post-stage conveying belt 240. Accordingly, the post-stage conveying unit 24 conveys each sheet 9 with the image formed thereon on the upper surface of the post-stage conveying belt 240 and feeds each sheet 9 to the output roller pair 25.

The drying device 6 dries the ink on each sheet 9 by blowing warm air to each sheet 9 conveyed by the post-stage conveying unit 24. The output roller pair 25 outputs each sheet 9 with the image formed thereon to the output tray 13.

The ink supplying device 4 includes a plurality of ink containers 40 that each stores ink. Each ink container 40 is an example of a liquid storage part for storing liquid. The ink is an example of the liquid.

The ink supplying device 4 supplies ink from the plurality of ink containers 40 to the plurality of inkjet heads 30, respectively. The plurality of ink containers 40 stores ink of different colors, respectively. The plurality of inkjet heads 30 dispenses the ink of different colors, respectively. In this embodiment, the ink colors include four colors, black, cyan, magenta, and yellow.

Each inkjet head 30 executes ink dispensing processing of dispensing ink droplets from each of the plurality of nozzles 31. The plurality of inkjet heads 30 forms an image to each sheet 9 by dispensing the ink droplets to each sheet 9 conveyed by the main conveyance unit 23.

The ink dispensing processing is an example of liquid dispensing processing of dispensing the ink droplets. Each inkjet head 30 is an example of a liquid dispensing head that executes the liquid dispensing processing. The ink dispensing device 3 is an example of an liquid dispensing apparatus including the liquid dispensing head.

The ink discharging processing is an example of liquid discharge processing of discharging the liquid from the liquid dispensing head. The ink discharging device 5 is an example of a liquid discharging device that executes the liquid discharge processing.

The control device 8 controls the sheet conveying device 2, the ink dispensing device 3, and the drying device 6.

The control device 8 controls the conveyance of each sheet 9 by controlling the sheet conveying device 2. In addition, the control device 8 causes the plurality of inkjet heads 30 to execute the ink dispensing processing in synchronization with the conveyance of the sheet 9.

In addition, the control device 8 controls the ink discharging device 5 to execute the ink discharging processing.

Each inkjet head 30 includes an introduction path 33 that is connected to the plurality of nozzles 31 (see Fig. 3). The ink supplied by the ink supplying device 4 is supplied to the plurality of nozzles 31 through the introduction path 33.

In addition, each inkjet head 30 includes a plurality of piezoelectric elements 32 corresponding to the plurality of nozzles 31 (see Fig. 3). Each piezoelectric element 32 vibrates when the piezoelectric element 32 receives a dispensing driving signal from the control device 8. Each piezoelectric element 32 vibrates to pressurize the ink so that the ink is ejected from each nozzle 31.

In the ink dispensing device 3, ink dispensing failures are likely to occur in a case where air-bubbles are generated in each inkjet head 30. The ink dispensing device 3 includes the ink discharging device 5 for discharging such air-bubbles with the ink from each inkjet head 30.

The ink discharging device 5 includes caps 51 capable of covering the nozzle groups 310 of the plurality of inkjet heads 30 (see Fig. 1). In addition, the ink discharging device 5 includes a suction device 52 that suctions the air inside the caps 51 covering the nozzle groups 310 (see Fig. 1). The ink discharging processing is processing of discharging the ink inside each of the plurality of inkjet heads 30 through the cap 51 by suctioning the air inside the cap 51.

By the ink discharging processing, the air-bubbles inside each inkjet head 30 are discharged with the ink. In addition, the ink supplying device 4 supplies new ink to each inkjet head 30 at the same time the ink inside each inkjet head 30 is discharged.

The main conveyance unit 23 is supported in the reference position for forming the sheet conveying path 20 between the plurality of inkjet heads 30 during the print processing. Fig. 1 shows a state in which the main conveyance unit 23 is located in the reference position.

The main conveyance unit 23 is supported to be movable to a conveyance standby position farther from the plurality of inkjet heads 30 than the reference position. In Fig. 1, the main conveyance unit 23 located in the conveyance standby position is shown as virtual lines (long dashed double-short dashed lines). In this embodiment, the conveyance standby position is a position vertically below the reference position.

The ink discharging device 5 includes a cap unit 50 and a unit moving device 500 (see Fig. 1). The cap unit 50 includes a part or entire part of the caps 51 and the suction device 52. The unit moving device 500 moves the cap unit 50 and the main conveyance unit 23.

The cap unit 50 is supported to be movable between a cap standby position and a cap position. Fig. 1 shows a state in which the cap unit 50 is located in the cap standby position.

The cap standby position is a position where the cap unit 50 does not interfere with the main conveyance unit 23 in the reference position. The cap position is the position of the cap unit 50 when the caps 51 cover the nozzle groups 310 of the plurality of inkjet heads 30.

In accordance with first movement control by the control device 8, the unit moving device 500 moves the main conveyance unit 23 from the reference position to the conveyance standby position and moves the cap unit 50 from the cap standby position to the cap position.

In addition, in accordance with second movement control by the control device 8, the unit moving device 500 moves the cap unit 50 from the cap position to the cap standby position and moves the main conveyance unit 23 from the conveyance standby position to the reference position (see Fig. 1).

When the suction device 52 is activated under the situation where the cap unit 50 is located in the cap position, the ink inside each inkjet head 30 is discharged with the air-bubbles and new ink with no air-bubbles is supplied to each inkjet head 30 from the ink supplying device 4.

### [Configuration of ink supplying device 4]

The ink supplying device 4 includes a supply path 41 and a pressure regulating valve apparatus 42 (see Fig. 2). The supply path 41 is connected to each ink container 40 and each inkjet head 30. The pressure regulating valve apparatus 42 is disposed in the supply path 41.

The pressure regulating valve apparatus 42 temporarily switches from a supply path closed state to a supply path open state in response to pressure changes caused in the supply path 41 due to the ink droplets dispensed by each inkjet head 30. The supply path closed state is a state in which a valve 423 blocks the supply path 41 (see Fig. 3).

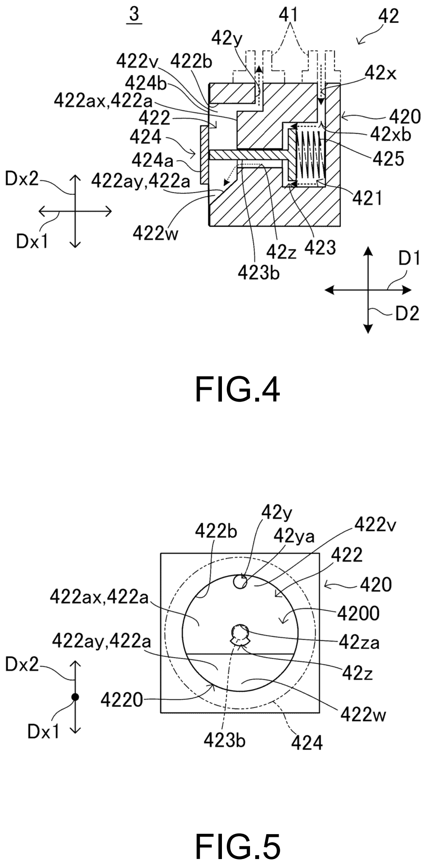

On the other hand, the supply path open state is a state in which the valve 423 unblocks the supply path 41 (see Fig. 4). When the pressure regulating valve apparatus 42 is switched to the supply path open state, ink is refilled into each inkjet head 30 in response to dispensing of ink droplets by each inkjet head 30 (see Fig. 4).

That is, the valve 423 is a member capable of blocking the supply path 41. When the pressure regulating valve apparatus 42 is in the supply path open state, each inkjet head 30 is supplied with ink from each ink container 40 through the supply path 41.

The ink supplying device 4 further includes a pressurizing pump 43 disposed in the supply path 41 (see Fig. 2). The pressurizing pump 43 pressurizes the ink from the supply path 41. The control device 8 activates the pressurizing pump 43 when the above-mentioned print processing is executed. Note that the pressurizing pump 43 may be omitted from the ink supplying device 4.

### [Configuration of pressure regulating valve apparatus 42]

As shown in Fig. 3, the pressure regulating valve apparatus 42 includes a main body 420, the valve 423, a cover member 424, and a spring 425.

The main body 420 includes a primary chamber 421, a secondary chamber 422, an inflow path 42x, an outflow path 42y, and a partition wall 4200. For example, the main body 420 is a member made of a synthetic resin. The cover member 424 includes a pressure-receiving plate 424a and a diaphragm 424b.

The inflow path 42x is a flow channel for the ink that flows therein from an upstream side of the supply path 41. The outflow path 42y is a flow channel for the ink that flows out therefrom to a downstream side of the supply path 41.

The primary chamber 421 is an ink storage chamber that is connected to the inflow path 42x. The secondary chamber 422 is an ink storage chamber that is connected to the outflow path 42y. The partition wall 4200 separates the primary chamber 421 and the secondary chamber 422.

A connecting hole 42z that is connected to the primary chamber 421 and the secondary chamber 422 is formed in the partition wall 4200. The valve 423 is a member capable of opening and closing the connecting hole 42z.

One end of the inflow path 42x that is connected to the supply path 41 is an inflow path inlet 42xa (see Fig. 3). The other end of the inflow path 42x that is connected to the primary chamber 421 is an inflow path outlet 42xb (see Fig. 3).

One end of the outflow path 42y that is connected to the secondary chamber 422 is an outflow path inlet 42ya (see Fig. 3). The other end of the outflow path 42y that is connected to the supply path 41 is an outflow path outlet 42yb (see Fig. 4).

The valve 423 has a blocking part (423a) 423a that closes the connecting hole 42z and a shaft part 423b formed to extend from the blocking part (423a) 423a (see Fig. 3). The blocking part (423a) 423a is disposed in the primary chamber 421. The shaft part 423b is disposed to penetrate the connecting hole 42z.

The valve 423 is movable between a closed position where the blocking part (423a) 423a closes the connecting hole 42z and an open position where the blocking part (423a) 423a opens the connecting hole 42z.

An opening 4220 is formed in the secondary chamber 422. The opening 4220 is formed on a side of the secondary chamber 422, which is opposite to the partition wall 4200.

The cover member 424 closes the opening 4220 of the secondary chamber 422. The pressure-receiving plate 424a covers a part of the opening 4220 and the diaphragm 424b covers the other part of the opening 4220.

The diaphragm 424b is connected to a rim part of the opening 4220 of the secondary chamber 422 and to the pressure-receiving plate 424a. The diaphragm 424b is a member capable of expanding and contracting.

The spring 425 is disposed in the primary chamber 421. The spring 425 biases the blocking part (423a) 423a so as to hold the valve 423 in the closed position.

When each inkjet head 30 executes the ink dispensing processing, the pressure inside the secondary chamber 422 decreases, the diaphragm 424b contracts, and the pressure-receiving plate 424a moves to the inside of the secondary chamber 422 from the reference position against the biasing force of the spring 425 (see Fig. 4).

When the pressure-receiving plate 424a moves to the inside of the secondary chamber 422, the pressure-receiving plate 424a pushes the shaft part 423b of the valve 423 against the biasing force of the spring 425 toward the primary chamber 421 (see Fig. 4). Accordingly, the valve 423 moves to the open position from the closed position and the pressure regulating valve apparatus 42 switches to the supply path open state from the supply path closed state.

That is, the diaphragm 424b expands and contracts in response to pressure changes inside the secondary chamber 422 and the valve 423 opens and closes the connecting hole 42z in response to the expansion and contraction of the diaphragm 424b.

The state in which the valve 423 closes the connecting hole 42z is the supply path closed state of the pressure regulating valve apparatus 42. The state in which the valve 423 opens the connecting hole 42z is the supply path open state of the pressure regulating valve apparatus 42.

When the pressure regulating valve apparatus 42 is in the supply path open state, the ink flows into the primary chamber 421 from the upstream side of the supply path 41 through the inflow path 42x (see Fig. 4). In addition, the ink flows into the secondary chamber 422 from the primary chamber 421 through the connecting hole 42z and further flows to the downstream side of the supply path 41 from the secondary chamber 422 through the outflow path 42y (see Fig. 4).

On the other hand, when each inkjet head 30 stops the ink dispensing processing, the pressure inside the secondary chamber 422 increases, and the diaphragm 424b accordingly stretches and the pressure-receiving plate 424a returns to the reference position. Accordingly, the valve 423 moves to the closed position from the open position and the pressure regulating valve apparatus 42 switches to the supply path closed state from the supply path open state (see Fig. 3).

Moreover, also when the ink discharging processing is executed, the pressure regulating valve apparatus 42 switches from the supply path closed state to the supply path open state. When the ink discharging processing ends thereafter, the pressure regulating valve apparatus 42 switches from the supply path open state to the supply path closed state.

By the way, air-bubbles may be generated in the supply path 41. When the air-bubbles stagnate the secondary chamber 422 in the pressure regulating valve apparatus 42, the air-bubbles absorb the pressure changes inside the secondary chamber 422. As a result, the diaphragm 424b does not suitably expand and contract, which may cause operation failures of the valve 423.

The pressure regulating valve apparatus 42 has a structure that makes stagnation of the air-bubbles unlikely to occur. The structure is described below.

In each figure, a first direction Dx1 and a second direction Dx2 are directions based on the pressure regulating valve apparatus 42. The first direction Dx1 is a direction in which the primary chamber 421 and the secondary chamber 422 are arranged. The shaft part 423b of the valve 423 is disposed along the first direction Dx1 of the pressure regulating valve apparatus 42.

The second direction Dx2 is a direction intersecting with the first direction Dx1. More specifically, the second direction Dx2 is a direction orthogonal to the first direction Dx1 and along a plane passing through the center of the outflow path inlet 42ya.

In the ink supplying device 4, the outflow path inlet 42ya is formed in one of both end portions of the secondary chamber 422 in the second direction Dx2 (see Fig. 3).

Hereinafter, one of the both end portions of the secondary chamber 422 in the second direction Dx2, where the outflow path inlet 42ya is formed, will be referred to as a first end portion 422v. Moreover, one of the both end portions of the secondary chamber 422 in the second direction Dx2, which is opposite to the first end portion 422v, will be referred to as a second end portion 422w.

The outflow path inlet 42ya is connected to the first end portion 422v of the secondary chamber 422. The connecting hole 42z is connected to a portion between the first end portion 422v and the second end portion 422w in the secondary chamber 422.

In Figs. 3 and 4, the pressure regulating valve apparatus 42 is disposed in such a position that the first direction Dx1 is along a horizontal direction D1 and the second direction Dx2 is along a vertical direction D2.

For example, the ink supplying device 4 is disposed so that the outflow path inlet 42ya is located in a top portion of the secondary chamber 422 (see Fig. 3 and 4). In this case, the connecting hole 42z is disposed to be lower than the outflow path inlet 42ya.

Note that the pressure regulating valve apparatus 42 may be disposed in such a tilted position that the first direction Dx1 and the second direction Dx2 each form an acute angle with respect to the horizontal direction D1 and the vertical direction D2, respectively. Note that also in a case where the pressure regulating valve apparatus 42 is disposed in the tilted position, the pressure regulating valve apparatus 42 is desirably disposed so that the outflow path inlet 42ya is located in the top portion of the secondary chamber 422.

The inside surface of the secondary chamber 422 includes a partition wall surface 422a and an enclosing surface 422b (see Fig. 3 and 5). The partition wall surface 422a is a surface of the partition wall 4200, which is on the side of the secondary chamber 422. The enclosing surface 422b is a surface that is formed between the opening 4220 and an rim of the partition wall surface 422a and encloses the secondary chamber 422 (see Fig. 3 and 5).

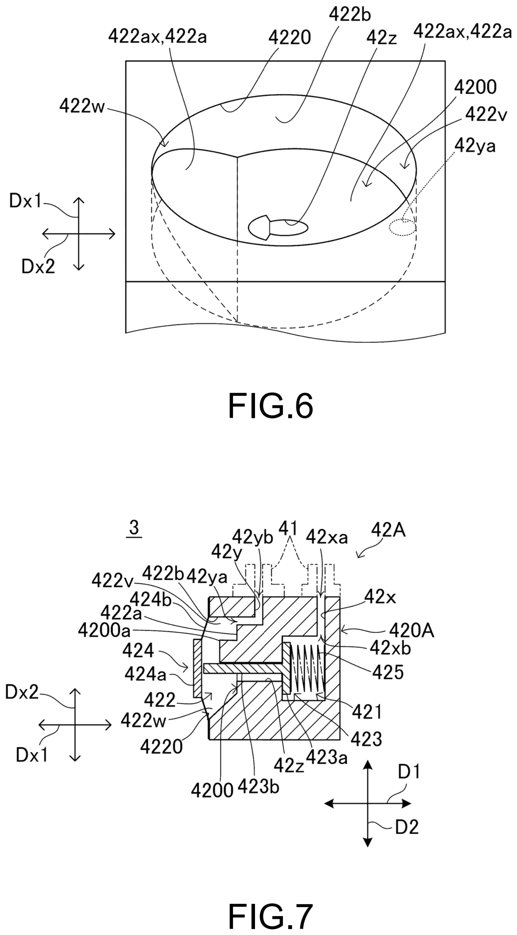

In this embodiment, the enclosing surface 422b is a cylindrical surface along the first direction Dx1 (see Fig. 5 and 6). Fig. 6 is a front view of the main body 420 as viewed along the first direction Dx1.

In this embodiment, the outflow path inlet 42ya is formed in a portion of the partition wall surface 422a, which is in contact with the enclosing surface 422b (see Figs. 3 to 6).

In this embodiment, the inflow path outlet 42xb is formed in the top portion of the primary chamber 421 (see Fig. 3).

Moreover, the inflow path inlet 42xa is formed in an outside upper surface of the main body 420 (see Fig. 3). That is, the inflow path 42x is formed from the outside upper surface of the main body 420 to the top portion of the primary chamber 421.

Moreover, the outflow path outlet 42yb is formed in the outside upper surface of the main body 420 (see Fig. 3).
That is, the outflow path 42y is formed from the top portion of the secondary chamber 422 to the outside upper surface of the main body 420.

In the pressure regulating valve apparatus 42, the connecting hole 42z is connected to a portion of the secondary chamber 422, which is closer to the second end portion 422w than the first end portion 422v (see Figs. 3 to 6).

The shaft part 423b of the valve 423 is disposed to penetrate an end portion of the connecting hole 42z, which is on the side of the outflow path 42y in the second direction Dx2 (see Fig. 3).

Hereinafter, the side of the outflow path 42y with respect to the shaft part 423b in the second direction Dx2 will be referred to as a first side and an opposite side to the first side with respect to the shaft part 423b will be referred to as a second side.

The ink flows through a region of the connecting hole 42z, which is on the second side with respect to the shaft part 423b.

In the pressure regulating valve apparatus 42, the outline of the connecting hole 42z is formed along a portion of the outline of the shaft part 423b, which is on the first side with respect to the center of the shaft part 423b (see Fig. 5).

More specifically, the outline of the shaft part 423b is cylindrical. The connecting hole 42z includes a quasi-cylindrical portion 42za along the surface of the shaft part 423b on the first side with respect to the center of the shaft part 423b.

When the ink flows in a path close to the shortest path from the connecting hole 42z to the outflow path 42y, the air-bubbles are likely to stagnate in a region of the secondary chamber 422, which is on the side of the second end portion 422w.

In the pressure regulating valve apparatus 42, the ink flows to the first end portion 422v from the connecting hole 42z via the region of the secondary chamber 422, which is on the side of the second end portion 422w, and then flows to the outflow path 42y. Therefore, stagnation of the air-bubbles in the secondary chamber 422 is unlikely to occur.

In this embodiment, the partition wall surface 422a includes a reference plane 422ax and a tilt surface 422ay (see Figs. 3 to 5). The reference plane 422ax is a plane along the second direction Dx2. The tilt surface 422ay is a surface that forms an obtuse angle with respect to the reference plane 422ax.

The tilt surface 422ay is formed to gradually approach the opening 4220 toward the second end portion 422w from a position between the connecting hole 42z and the second end portion 422w of the secondary chamber 422 (see Figs. 3 to 6). Accordingly, the second end portion 422w of the secondary chamber 422 has a dimension in the first direction Dx1 that is formed to be smaller than the first end portion 422v of the secondary chamber 422.

In the secondary chamber 422, the second end portion 422w has a lower total flow rate of the ink than the first end portion 422v. Therefore, the air-bubbles may stagnate by adhering to the wall surface at the second end portion 422w of the secondary chamber 422.

In the pressure regulating valve apparatus 42, the ink flows at a relatively high velocity in the second end portion 422w. Therefore, the air-bubbles are unlikely to adhere to the wall surface at the second end portion 422w of the secondary chamber 422.

### [First modified example]

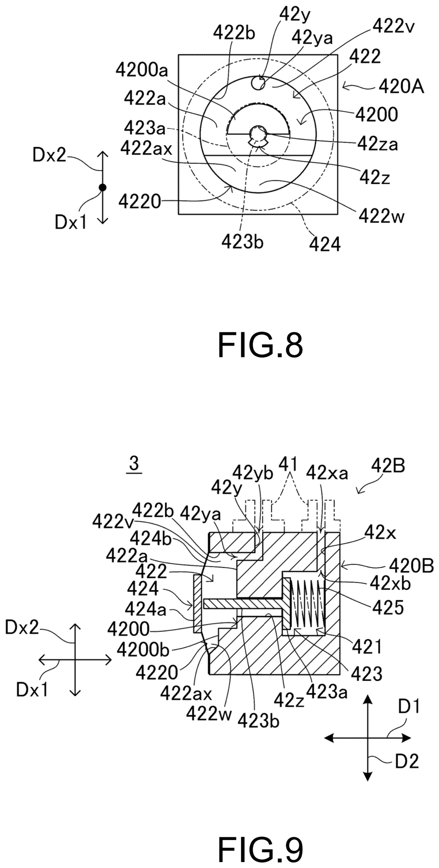

Next, a pressure regulating valve apparatus 42A according to a first modified example that can be applied to the ink dispensing device 3 of the inkjet recording apparatus 10 will be described with reference to Figs. 7 and 8. The pressure regulating valve apparatus 42A is a modified example of the pressure regulating valve apparatus 42.

The pressure regulating valve apparatus 42A has a configuration in which a main body 420A replaces the main body 420 in the pressure regulating valve apparatus 42. The main body 420A has a configuration in which a first projection 4200a is added to the partition wall 4200 of the main body 420.

The first projection 4200a projects toward the opening 4220 in a region from a rim of the connecting hole 42z to a position between the connecting hole 42z and the first end portion 422v in the second direction Dx2.

In the example shown in Fig. 7, the first projection 4200a is formed in a region of the partition wall 4200, which faces the pressure-receiving plate 424a.

In the pressure regulating valve apparatus 42A, it is further ensured that the ink can easily pass through the region of the secondary chamber 422, which is on the side of the second end portion 422w. Also in a case where the pressure regulating valve apparatus 42A is employed, effects similar to those in a case where the pressure regulating valve apparatus 42 is employed can be obtained.

### [Second modified example]

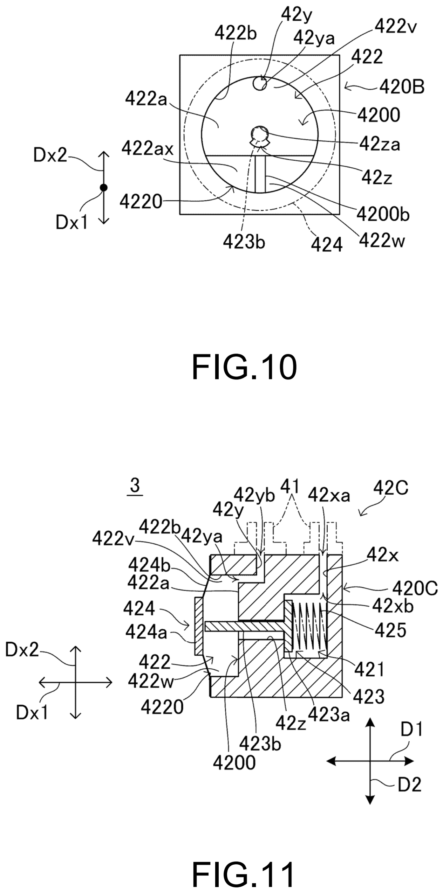

Next, a pressure regulating valve apparatus 42B according to a second modified example that can be applied to the ink dispensing device 3 of the inkjet recording apparatus 10 will be described with reference to Figs. 9 and 10. The pressure regulating valve apparatus 42B is a modified example of the pressure regulating valve apparatus 42.

The pressure regulating valve apparatus 42B has a configuration in which a main body 420B replaces the main body 420 in the pressure regulating valve apparatus 42. The main body 420B has a configuration in which a second projection 4200b is added to the partition wall 4200 of the main body 420.

The second projection 4200b projects toward the opening 4220 at the second end portion 422w of the secondary chamber 422.

At the second end portion 422w of the secondary chamber 422, the second projection 4200b increases the flow velocity of the ink and causes turbulent flows of the ink. Accordingly, the air-bubbles are more unlikely to adhere to the wall surface at the second end portion 422w of the secondary chamber 422.

Also in a case where the pressure regulating valve apparatus 42B is employed, effects similar to those in a case where the pressure regulating valve apparatus 42 is employed can be obtained.

### [Third modified example]

Next, a pressure regulating valve apparatus 42C according to a third modified example that can be applied to the ink dispensing device 3 of the inkjet recording apparatus 10 will be described with reference to Fig. 11. The pressure regulating valve apparatus 42C is a modified example of the pressure regulating valve apparatus 42.

The pressure regulating valve apparatus 42C has a configuration in which the main body 420 in the pressure regulating valve apparatus 42 replaces a main body 420C. The main body 420C has a configuration in which the tilt surface 422ay is removed from the partition wall surface 422a of the main body 420.

Also in the pressure regulating valve apparatus 42C, the ink flows to the first end portion 422v via the region of the secondary chamber 422, which is on the side of the second end portion 422w from the connecting hole 42z, and then flows to the outflow path 42y.

Thus, also in a case where the pressure regulating valve apparatus 42C is employed, stagnation of the air-bubbles in the secondary chamber 422 is unlikely to occur.

### [Fourth modified example]

The pressure regulating valve apparatus 42, 42A, 42B, 42C described above may be applied to another liquid dispensing apparatus that dispenses liquid other than the ink.

It is to be understood that the embodiments herein are illustrative and not restrictive, since the scope of the disclosure is defined by the appended claims.

## Claims

1. A pressure regulating valve apparatus (42) that is disposed in a supply path (41), which is connected to a liquid storage part (40) for storing liquid and to a liquid dispensing head (30) for dispensing droplets, and that switches from a state to block the supply path (41) to a state to unblock the supply path (41) in response to pressure changes caused in the supply path (41) due to dispensing of the droplets by the liquid dispensing head (30), comprising:
an inflow path (42x) that is a flow channel for the liquid that flows therein from an upstream side of the supply path (41);
a primary chamber (421) that is connected to the inflow path (42x);
an outflow path (42y) that is a flow channel for the liquid that flows out therefrom to a downstream side of the supply path (41);
a secondary chamber (422) that is connected to the outflow path (42y) and has an opening (4220) formed therein;
a partition wall (4200) that separates the primary chamber (421) and the secondary chamber (422) and has a connecting hole (42z) formed therein to be connected to the primary chamber (421) and the secondary chamber (422);
a cover member (424) that closes the opening (4220) and includes a diaphragm (424b) that expands and contracts in response to pressure changes in the secondary chamber (422); and
a valve (423) that opens and closes the connecting hole (42z) in response to the expansion and contraction of the diaphragm (424b), **characterized in that**
an outflow path inlet (42ya) that is one end of the outflow path (42y) is connected to a first end portion of the secondary chamber (422) in a second direction intersecting a first direction that is a direction in which the primary chamber (421) and the secondary chamber (422) are arranged, and
the connecting hole (42z) is connected to a portion closer to a second end portion of the secondary chamber (422) in the second direction than the first end portion of the secondary chamber (422) in the second direction.

2. The pressure regulating valve apparatus (42) according to claim 1, wherein
the valve (423) includes
a blocking part (423a) that is disposed in the primary chamber (421) and closes the connecting hole (42z), and
a shaft part (423b) formed to extend from the blocking part (423a), and
the shaft part (423b) is disposed to penetrate an end portion of the connecting hole (42z) on a side of the outflow path (42y) in the second direction.

3. The pressure regulating valve apparatus (42) according to claim 2, wherein
an outline of the connecting hole (42z) is formed along a portion of an outline of the shaft part (423b) on the side of the outflow path (42y) in the second direction with respect to a center of the shaft part (423b).

4. The pressure regulating valve apparatus (42) according to any one of claims 1 to 3, wherein
the partition wall (4200) has a projection (4200a) projecting toward the opening (4220) in a region from a rim of the connecting hole (42z) to a position between the connecting hole (42z) and the first end portion in the second direction.

5. A liquid dispensing apparatus (3) **characterized by** comprising:
a supply path (41) that is connected to a liquid storage part (40) for storing liquid;
a liquid dispensing head (30) that is connected to the supply path (41), includes a plurality of nozzles (31), is supplied with the liquid from the liquid storage part (40) through the supply path (41), and dispenses droplets from each of the plurality of nozzles (31); and
a pressure regulating valve apparatus (42) according to any one of claims 1 to 4 that is disposed in the supply path (41).

6. An inkjet recording apparatus (10) **characterized by** comprising:
a sheet conveying device (2) that conveys a sheet; and
a liquid dispensing apparatus (3) according to claim 5 that forms an image on the sheet by dispensing ink droplets to the conveyed sheet.
